# EUROPEAN PATENT SPECIFICATION

(11) **EP 2 236 859 B1**
(45) Date of publication and mention of the grant of the patent: **16.05.2012**
(21) Application number: 10157667.6
(22) Date of filing: 25.03.2010
(51) Int. Cl.: F16H 7/08

(54) **Auto-tensioner**
Selbstspanner
Tendeur automatique

(30) Priority: 01.04.2009 JP 2009089146
(43) Date of publication of application: 06.10.2010
(73) Proprietor: NTN Corporation, Osaka-shi, Osaka (JP)
(72) Inventor: Yasui, Makoto, Iwata-shi Shizuoka (JP)
(74) Representative: Grünecker, Kinkeldey, Stockmair & Schwanhäusser

(56) References cited:
- JP-A- 10 184 824

## Description

### BACKGROUND OF THE INVENTION

The present invention relates to an auto-tensioner for maintaining the tension of a chain or a toothed belt for driving camshafts of an automotive engine.

In an automotive engine, the rotation of the crankshaft is transmitted to camshafts through a chain or a toothed belt (hereinafter referred only to a chain) to rotate the camshafts and thereby open and close valves for combustion chambers. In order to keep the tension of the chain to a proper range, a tension adjusting device is frequently used which comprises a chain guide pivotable about a pivot shaft, and an auto-tensioner for pressing the chain through the chain guide.

One known auto-tensioner of this type includes a nut member having an internal thread on its inner periphery, a screw rod having an external thread on its outer periphery that is in threaded engagement with the internal thread of the nut member, and a return spring biasing the screw rod in the direction to protrude from the nut member, thereby removing slackness of the chain by protruding the screw rod from the nut member (see for example: JP patent publications 9-280330A, 2008-267560A and 2007-218371A).

In either of the auto-tensioners disclosed in JP 9-280330A and 2008-267560A, the nut member is fixedly mounted in a cylindrical housing having an open end and a closed end such that an end of the screw rod protruding from the nut member is located nearer to the open end of the housing, whereby the screw rod presses the chain.

In the auto-tensioner disclosed in JP 2007-218371A, the nut member is slidably inserted in a cylindrical housing having an open end and a closed end such that an end of the screw rod protruding from the nut member is located nearer to the closed end of the housing and is in abutment with a rod seat provided in the housing, whereby the nut member presses the chain.

With these auto-tensioners, when the tension of the chain increases while the engine is running, an axial load is applied that tends to push the screw rod into the nut member. This axial load is received by the pressure flanks of the external thread and the internal thread. As the chain vibrates, slip occurs continuously between the pressure flanks, thereby causing the screw rod to be gradually pushed into the nut member, thereby reducing the tension of the chain. Since the slip between the pressure flanks due to vibration of the chain is very small, the screw rod is moved slowly, producing the damper effect.

When the tension of the chain decreases while the engine is running, the screw rod protrudes from the nut member under the force of the return spring, thereby removing slackness of the chain.

According to the stop positions of the camshafts when the engine is stopped, the tension of the chain 6 may be kept high. But since the chain does not vibrate while the engine is not running, no slip occurs between the pressure flanks of the external thread and the internal thread, thus keeping the screw rod in a fixed position. This makes the chain less likely to slacken when the engine is restarted, thus allowing smooth restart of the engine.

With this type of auto-tensioners, the pressure flanks of the external thread and the internal thread extend parallel to each other. Thus, when these pressure flanks contact each other, engine oil present between these pressure flanks tends to form oil film due to the squeezing effect, especially at low temperature because the viscosity of engine oil is high at low temperature.

If oil film forms between the pressure flanks, the oil film dramatically reduces the frictional resistance between the pressure flanks, causing excessive slippage between the pressure flanks. As a result, the screw rod may move at too high a speed when the tension of the chain increases, thus reducing the damper effect of the auto-tensioner.
JP 10-184824A, which is considered as the closest prior art, discloses a tensioner with a nut member having an internal thread and a screw rod having an external thread. The internal thread and the external thread have asymmetrical flanks. The flank angle of the external thread is larger than the flank angle of the internal thread so that the influence of the abrasion of the threads on the displacement between the internal and external threads caused by axial load can be reduced. However, slippage between the flanks of the external thread and the internal thread is not prevented effectively due to the low friction force between the threads.

An object of the present invention is to prevent formation of oil film between the pressure flanks of the external thread and the internal thread due to the squeezing effect, thereby stabilizing the damper effect of the auto-tensioner and to prevent slippage between the pressure flanks of the external thread and the internal thread more effectively.

### SUMMARY OF THE INVENTION

In order to achieve this object, the present invention provides an auto-tensioner in which the pressure flank of the external thread has a flank angle that is smaller than the flank angle of the pressure flank of the internal thread. With this arrangement, since the pressure flanks of the external thread and the internal thread are not parallel to each other, oil film is less likely to form between the pressure flanks due to the squeezing effect.

With this arrangement, since the external thread and the internal thread contact each other at their radially outer portion, the radius of friction between the external thread and the internal thread is larger than when the pressure flank of the external thread has a larger flank angle than the pressure flank of the internal thread, so that it is possible to more effectively prevent slippage between the pressure flanks of the external thread and the internal thread.

Preferably, an oil film expelling groove is formed in at least one of the pressure flank of the external thread and the pressure flank of the internal thread. With this arrangement, when the pressure flanks of the external thread and the internal thread contact each other, any engine oil present between the pressure flanks is allowed to be discharged through the oil film expelling groove. This effectively suppresses formation of oil film due to the squeezing effect. The oil expelling groove may be a helical groove extending the center of the pressure flank along its lead.

In a specific arrangement, the external thread and the internal thread have clearance flanks, respectively, wherein the flank angles of the pressure flanks are greater than the flank angles of the clearance flanks, respectively, whereby the external thread and the internal thread have a serration-shaped section. In this case, the return spring may be a compression coil spring that applies an axial force to the screw rod that tends to push the screw rod out of the nut member.

If the external thread and the internal thread are serration-shaped threads, trapezoidal threads, or triangular threads, the return spring may be a torsion spring that applies torque to the screw rod ring that tends to push the screw rod out of the nut member. The torsion spring may be a torsion coil spring, a spiral spring or a volute spring.

The present invention is applicable to e.g. the following auto-tensioners.
(1) An auto-tensioner wherein the nut member is slidably inserted in a cylindrical housing having an open end and a closed end such that an end of the screw rod protruding from the nut member is located nearer to the closed end of the housing and is in abutment with a rod seat provided in the housing, whereby the nut member presses a chain or a belt.
(2) An auto-tensioner wherein the nut member is fixedly mounted in a cylindrical housing having an open end and a closed end such that an end of the screw rod protruding from the nut member is located nearer to the open end of the housing, whereby the screw rod presses a chain or a belt.

With the auto-tensioner according to the present invention, since the pressure flanks of the external thread and the internal thread are not parallel to each other, oil film is less likely to form between the pressure flanks due to the squeezing effect. Thus, the auto-tensioner according to the present invention can stably perform its damper function even at low temperature where the viscosity of engine oil is high.

### BRIEF DESCRIPTION OF THE DRAWINGS

Fig. 1 is a front view of a chain transmission assembly including an auto-tensioner according to a first embodiment of the present invention;
Fig. 2 is an enlarged sectional view taken along line II-II of Fig. 1;
Fig. 3A is a partial enlarged sectional view of the auto-tensioner of Fig. 2, showing its external thread and internal thread when their clearance flanks are in contact with each other;
Fig. 3B is a view similar to Fig. 3A and showing the state when the pressure flanks of the external thread and the internal thread are in contact with each other.
Figs. 4A and 4B show a modification of the auto-tensioner of Figs. 3A and 3B in which the pressure flank of the external thread has a larger flank angle than the pressure flank of the internal thread, of which Fig. 4A is an enlarged sectional view of the external and internal threads when their clearance flanks are in contact with each other and Fig. 4B is an enlarged sectional view of the external and internal threads when their pressure flanks are in contact with each other;
Fig. 5 is front view of a chain transmission assembly including an auto-tensioner according to a second embodiment of the present invention;
Fig. 6 is an enlarged sectional view taken along line VI-VI of Fig. 5;
Fig. 7A is a partial enlarged sectional view of the auto-tensioner of Fig. 6, showing its external thread and internal thread when their clearance flanks are in contact with each other;
Fig. 7B is a view similar to Fig. 7A and showing the state when the pressure flanks of the external thread and the internal thread are in contact with each other.
Fig. 8 is an enlarged sectional view of the external and internal threads of a modification of Figs. 7A and 7B in which an oil film expelling groove is formed in the pressure flank of the external thread;
Fig. 9 is an enlarged sectional view of the external and internal threads of a modification of Figs. 7A and 7B in which oil film expelling grooves are formed in the pressure flanks of the external thread and the internal threads, respectively;
Fig. 10 is an enlarged sectional view of a modification of Fig. 6 in which a torsion coil spring is used as the return spring;
Fig. 11 is an enlarged sectional view of a modification of Fig. 6 in which a spiral spring is used as the return spring;
Fig. 12 is an enlarged sectional view taken along line XII-XII of Fig. 11;
Fig. 13 is an enlarged sectional view of the external thread and the internal thread shown in Fig. 11;
Fig. 14 is an enlarged sectional view of a modification of Fig. 6 in which a volute spring is used as the return spring; and
Fig. 15 is an enlarged sectional view of the external thread and the internal thread shown in Fig. 14.

### DETAILED DESCRIPTION OF THE PREFERRED EMBODIMENTS

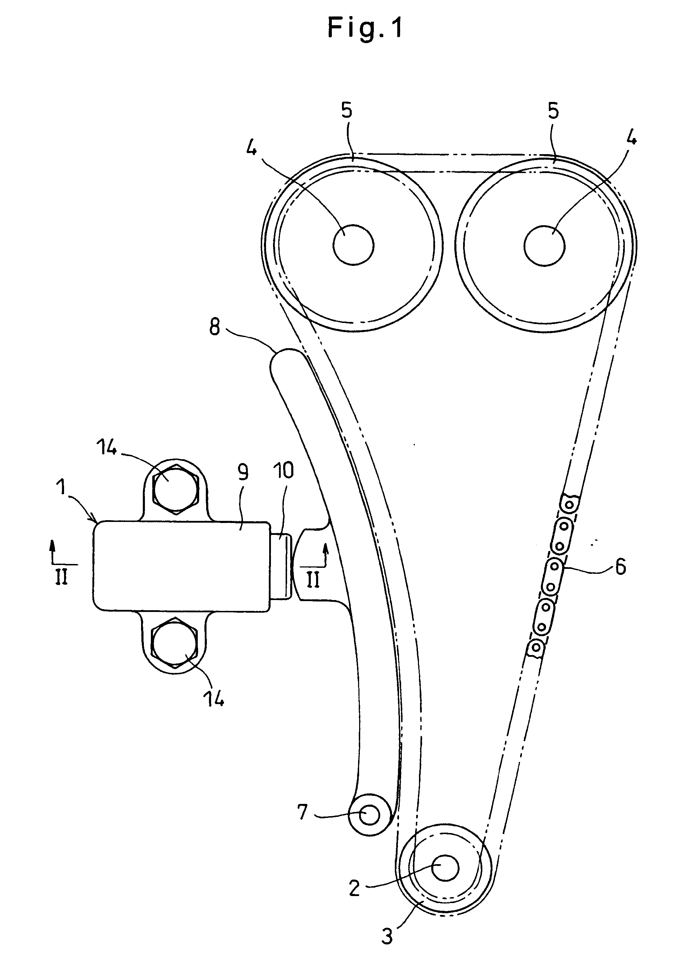

Fig. 1 shows a chain transmission assembly including the auto-tensioner according to the first embodiment of the present invention. This chain transmission assembly further includes a sprocket 3 fixed to an engine crankshaft 2, sprockets 5 fixed to respective camshafts 4, and a chain 6 trained around the sprockets 3 and 5, thereby coupling the sprocket 4 to the sprockets 5. Thus, the rotation of the crankshaft 2 is transmitted to the camshafts 4 through the chain 6, thereby opening and closing valves (not shown) of combustion chambers (also not shown).

A chain guide 8 pivotable about a pivot shaft 7 is in contact with the chain 6. The auto-tensioner 1 presses the chain 6 through the chain guide 8.

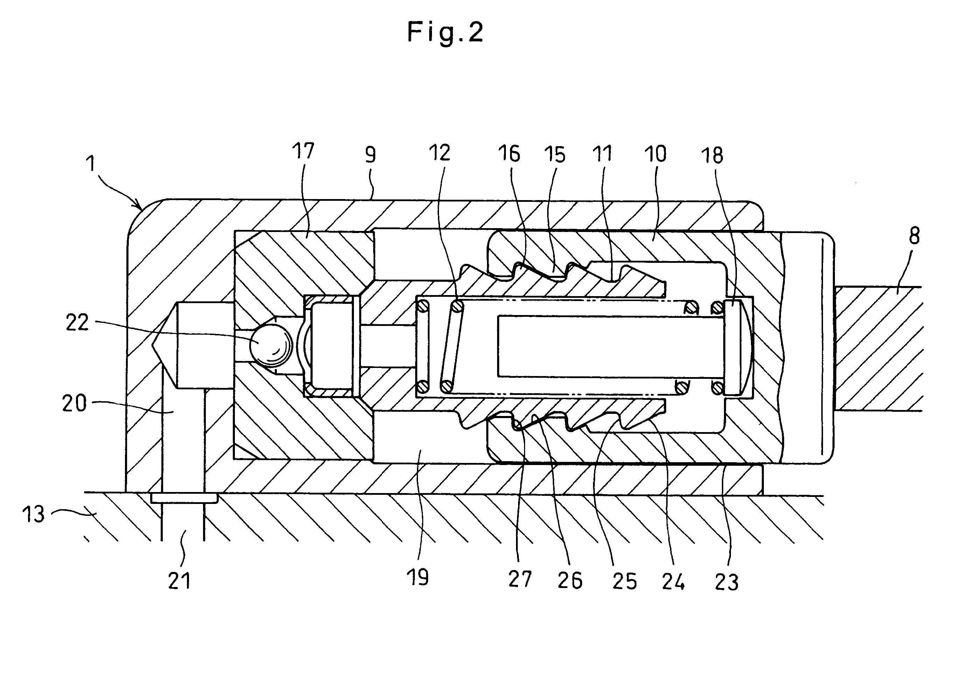

As shown in Fig. 2, the auto-tensioner 1 comprises a cylindrical housing 9 having open and closed ends, a nut member 10 axially slidably inserted in the housing 9, a screw rod 11 kept in threaded engagement with the nut member 10, and a return spring 12 biasing the screw rod 11.

As shown in Fig. 1, the housing 9 is fixed to an engine block 13 (see Fig. 2) by means of bolts 14 with its open end facing the chain guide 8.

As shown in Fig. 2, the nut member 10 is a cylindrical member having an open end and a bottom at the other end, and is formed with an internal thread 15 on its inner periphery which is in threaded engagement with an external thread 16 formed on the outer periphery of the screw rod 11. The screw rod 11 has one end thereof protruding from the nut member 10 and kept in abutment with a rod seat 17 press-fitted into and fixed in position in the housing 9. The nut member 10 is mounted in the housing 9 such that the end of the screw rod 11 protruding from the nut member 10 is located in the housing 9.

The return spring is a compression coil spring, and has one end thereof supported by the nut member 10 through a spring seat 18, thereby applying at the other end an axial force to the screw rod 11 that tends to push the screw rod 11 out of the nut member 10. The axial force thus biases the screw rod 11 in a direction to protrude from the nut member 10.

As a result, the nut member 10 is biased in a direction to protrude from the housing 9 under the reaction force of the return spring 12. Thus, its end protruding from the housing 9 is in abutment with the chain guide 8 and presses the chain 6 through the chain guide 8.

The housing 9 is formed with an oil supply passage 20 for introducing engine oil into a pressure chamber 19 defined by the housing 9 and the nut member 10. The oil supply passage 20 communicates with an oil hole 21 formed in the engine block 13 and is configured to introduce engine oil supplied from an oil pump (not shown) through the oil hole 21 into the pressure chamber 19. At the outlet of the oil supply passage 20, a check valve 22 is provided which allows only the flow of engine oil into the pressure chamber 19 from the oil supply passage 20.

An extremely small leakage gap 23 is formed between sliding surfaces of the nut member 10 and the housing 9 so that engine oil in the pressure chamber 19 can leak through the leakage gap 23.

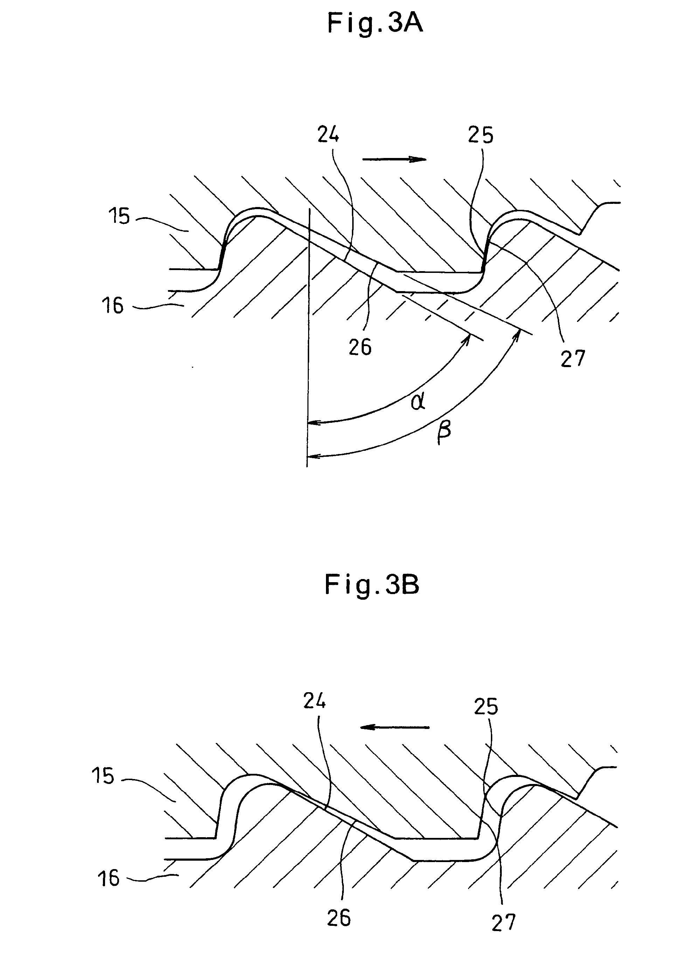

As shown in Fig. 3A, the external thread 16 has a pressure flank 24 for receiving pressure when axial loads are applied that tend to push the screw rod 11 into the nut member 10, and a clearance flank 25. The pressure flank 24 has a flank angle α that is larger than the flank angle of the clearance flank 25, so that the external thread 16 has a serration-shaped section. Similarly, the internal thread 15 also has a pressure flank 26 adapted to receive pressure when axial loads are applied that tend to push the screw rod 11 into the nut member 10 and having a flank angle β that is larger than the flank angle of its clearance flank 27, so that the internal thread 15 has a serration-shaped section.

The flank angle α of the pressure flank 24 of the external thread 16 and the flank angle β of the pressure flank 26 of the internal thread 15 are determined such that when static loads are applied that tend to push the screw rod 11 into the nut member 10, rotation of the screw rod 11 is restricted by the frictional resistance to rotation produced between the pressure flanks 24 and 26. The flank angles of the clearance flanks 25 and 27 of the external and internal threads 16 and 15 are determined such that when static loads are applied that tend to push the screw rod 11 out of the nut member 10, the screw rod 11 is allowed to rotate.

The flank angle α of the pressure flank 24 of the external thread 16 is smaller than the flank angle β of the pressure flank 26 of the internal thread 15. Thus, as shown in Fig. 3B, when loads are applied that tend to push the screw rod 11 into the nut member 10, the radially outer end portion of the pressure flank 24 of the external thread 16 is adapted to be brought into line contact with the pressure flank 26 of the internal thread 15. If the flank angle β of the pressure flank 26 of the internal thread 15 is determined to be 75°, the flank angle α of the pressure flank 24 of the external thread 16 may be determined to be e.g. 74°. The clearance flank 25 of the external thread 16 has a flank angle equal to that of the clearance flank 27 of the internal thread 15.

Now the operation of this auto-tensioner is described.

When the tension of the chain increases while the engine is running, an axial load is applied that tends to push the screw rod 11 into the nut member 10, by the tension of the chain 6, and the axial load is received by the pressure flanks 24 and 26 of the external thread 16 and the internal thread 15. As the chain 6 vibrates, slip occurs continuously between the pressure flanks 24 and 26, thereby causing the screw rod 11 to be gradually pushed into the nut member 10, and the nut member 10 to be gradually pushed into the housing 9. The tension of the chain 6 is thus absorbed. Since the slip between the pressure flanks 24 and 26 in this state is very small, the screw rod 11 is moved slowly, producing the damper effect. The damper effect is also produced by the viscous resistance of engine oil that flows out of the pressure chamber 19 through the leakage gap 23.

When the tension of the chain 6 decreases while the engine is running, the screw rod 11 protrudes from the nut member 10 under the force of the return spring 12, so that the nut member 10 also protrudes from the housing 9, thereby eliminating slackness of the chain 6. In this state, the check valve 22 opens, allowing engine oil to be introduced into the pressure chamber 19 through the oil supply passage 20, so that the nut member 10 moves quickly.

According to the stop positions of the camshafts 4 when the engine is stopped, the tension of the chain 6 may be kept high. But since the chain 6 does not vibrate while the engine is not running, no slip occurs between the pressure flanks 24 and 26 of the external thread 16 and the internal thread 15, thus keeping the screw rod 11 in a fixed position. This makes the chain 6 less likely to slacken when the engine is restarted, thus allowing smooth restart of the engine.

With this auto-tensioner 1, since the pressure flank 24 of the external thread 16 is not parallel to the pressure flank 26 of the internal thread 15, oil film is less likely to develop between the pressure flanks 24 and 26 due to the squeezing effect. This suppresses excessive slip between the pressure flanks 24 and 26 of the external thread 16 and the internal thread 15 even when the ambient temperature is low and the viscosity of engine oil high, which in turn allows the auto-tensioner to stably perform its damper function.

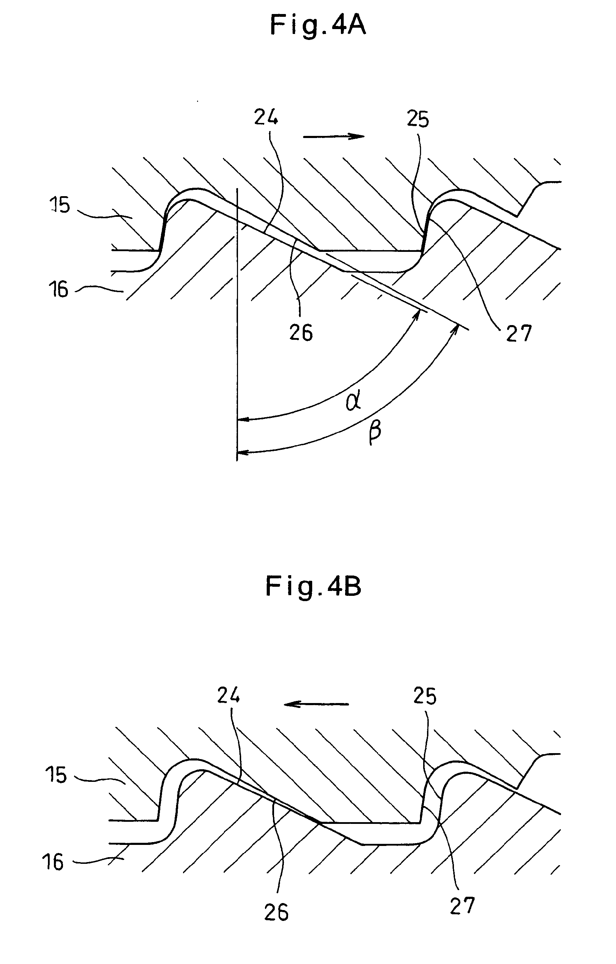

As shown in Figs. 4A and 4B, the pressure flanks 24 and 26 of the external thread 16 and the internal thread 15 may be configured such that the flank angle α of the pressure flank 24 of the external thread 16 is larger than the flank angle β of the pressure flank 26 of the internal thread 15. (For example, the pressure flank 24 of the external thread 16 may have a flank angle α of 76° while the pressure flank 26 of the internal thread 15 may have a flank angle β of 75°.) But as shown in Fig. 3A, by determining the flank angle α of the pressure flank 24 of the external thread 16 to be smaller than the flank angle β of the pressure flank 26 of the internal thread 15, since the external thread 16 and the internal thread 15 contact each other at their radially outer portions as shown in Fig. 3B, the radius of friction between the external thread 16 and the internal thread 15 is large, so that it is possible to more effectively prevent slippage between the pressure flanks 24 and 26 of the external thread 16 and the internal thread 15.

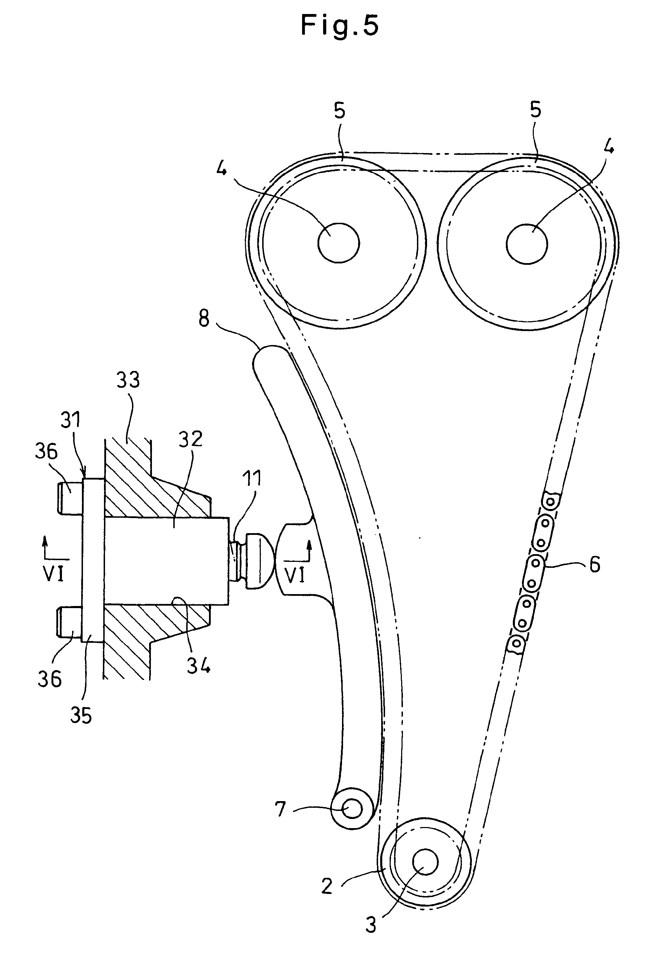

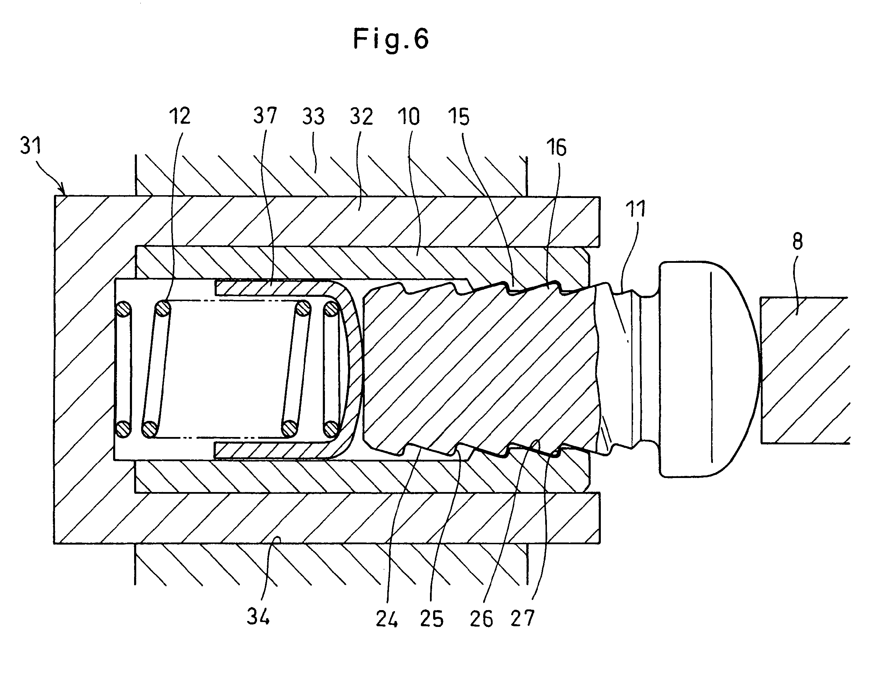

Figs. 5 and 6 show an auto-tensioner 31 according to the second embodiment of the present invention. Elements corresponding to those of the first embodiment are denoted by identical numerals and their description is omitted.

As shown in Fig. 6, the auto-tensioner 31 includes a cylindrical housing 32 having open and closed ends, a nut member 10 pressed into and fixed to the housing 32, a screw rod 11 having an external thread 16 on the outer periphery thereof that is in threaded engagement with an internal thread 15 formed on the inner periphery of the nut member 10, and a return spring 12 biasing the screw rod 11.

The housing 32 is inserted in a tensioner mounting hole 34 formed in an engine cover 33 with its open end protruding into the engine cover 33. As shown in Fig. 5, the housing 32 has a flange 35 integrally formed on the outer periphery thereof and fixed to the engine cover 33 by bolts 36.

As shown in Fig. 6, the nut member 10 is a cylindrical member having openings at both ends and pressed into and fixed to the housing 32. The nut member 10 is fixed in position in the housing 32 with its end from which the screw rod 11 protrudes located on the same side as the open end of the housing 32.

The return spring 12 has one end thereof supported on the closed end of the housing 32 and axially biases, at the other thereof, the screw rod 11 in the direction to protrude from the nut member 10. The screw rod 11 is in abutment with the chain guide 8 at its end protruding from the nut member 10, thereby pressing the chain 6 through the chain guide 8.

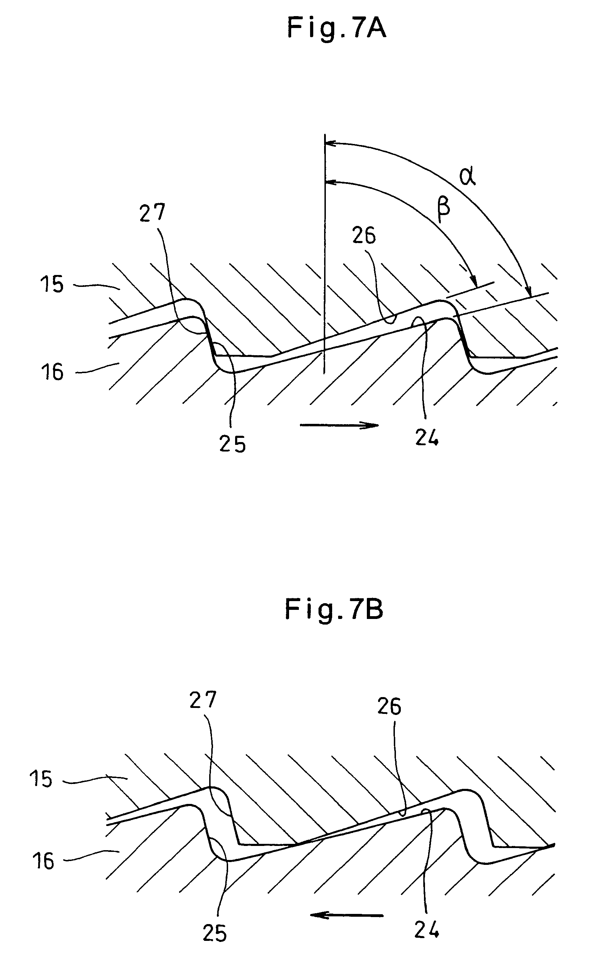

As shown in Fig. 7A, the external thread 16 has a pressure flank 24 having a flank angle α that is larger than the flank angle of the clearance flank 25, so that the external thread 16 has a serration-shaped section. Similarly, the internal thread 15 also has a pressure flank 26 having a flank angle β that is larger than the flank angle of its clearance flank 27, so that the internal thread 15 has a serration-shaped section. Also, the flank angle α of the pressure flank 24 of the external thread 16 is larger than the flank angle β of the pressure flank 26 of the internal thread 15. Thus, as shown in Fig. 7B, when a load is applied to the screw rod 11 that tends to push the screw rod into the nut member, the radially inner end portion of the pressure flank 26 of the internal thread 15 is adapted to be brought into line contact with the pressure flank 24 of the external thread 16.

With this auto-tensioner 31, as in the first embodiment, since the pressure flank 24 of the external thread 16 is not parallel to the pressure flank 26 of the internal thread 15, oil film is less likely to develop between the pressure flanks 24 and 26 due to the squeezing effect, thus allowing the auto-tensioner to stably perform its damper function.

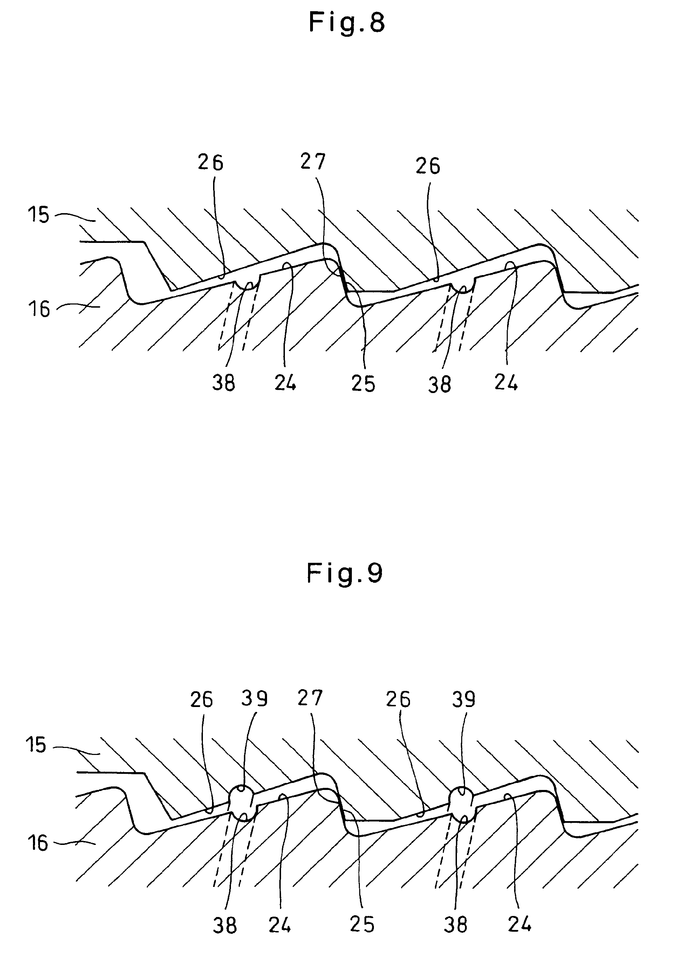

As shown in Fig. 8, an oil film expelling groove 38 may be formed in the pressure flank 24 of the external thread 16. With this arrangement, when the pressure flanks 24 and 26 of the external thread 16 and the internal thread 15 contact each other, any engine oil present between the pressure flanks 24 and 26 is allowed to be discharged through the oil film expelling groove 38. This effectively suppresses formation of oil film due to the squeezing effect. As shown, the oil expelling groove 38 may be a helical groove extending the center of the pressure flank 24 along its lead. Since such a helical groove can be formed simultaneously when forming the external thread 16 by rolling, it can be formed at a low cost.

As shown in Fig. 9, an additional oil film expelling groove 39 may be formed in the pressure flank 26 of the internal thread 15. The oil film expelling groove 39 may also be a helical groove extending the center of the pressure flank 26 along its lead. Since such a helical groove can be formed simultaneously when forming the internal thread 15 by tapping, it can be formed at a low cost.

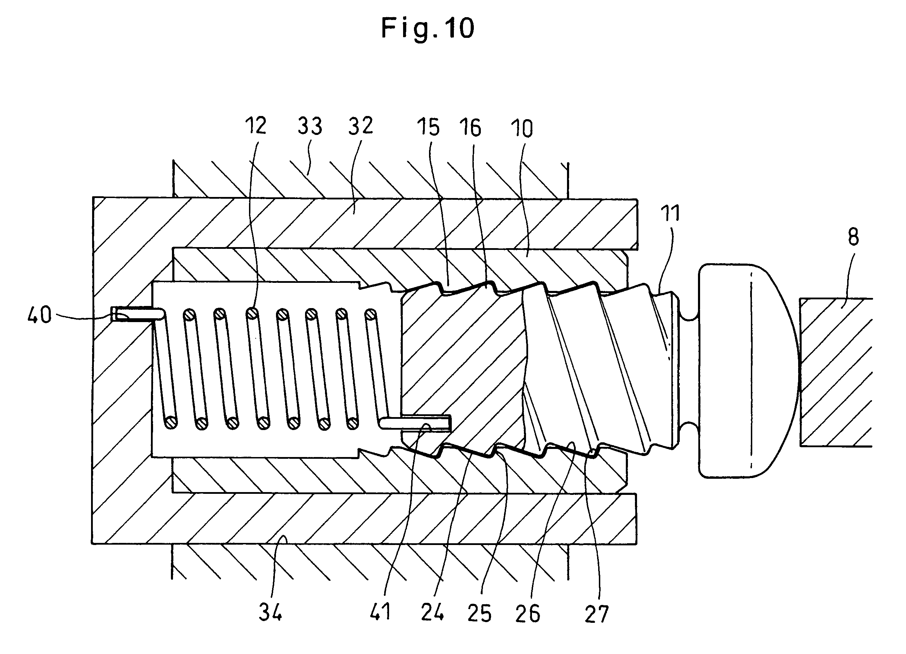

In the embodiments, a compression coil spring is used as the return spring 12 for biasing the screw rod 11 in the direction to protrude from the nut member 10. But as shown in Fig. 10, a torsion coil spring may be used instead.

The return spring of Fig. 10 has one end thereof engaged in an engaging hole 40 formed in the closed end of the housing 32 and the other end engaged in an engaging hole 41 formed in the screw rod 11, thereby applying torque to the screw rod 11 that tends to push the screw rod 11 out of the nut member 10 by its torsional deformation.

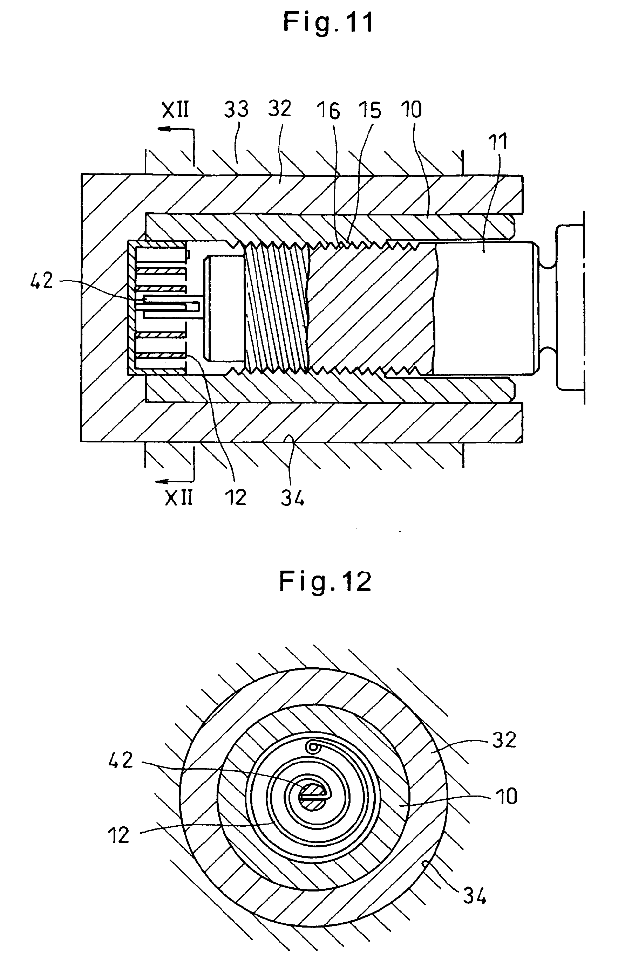

Further alternatively, the return spring 12 may be a torsion spring other than a torsion coil spring, such as ones shown in Figs. 11, 12 and 14.

The return spring 12 shown in Figs. 11 and 12 is a spiral spring comprising a spirally wound thin sheet material. This return spring 12 has its radially outer end rotationally fixed to the closed end of the housing 32 and its radially inner end inserted in a slit formed in a protrusion 42 of the screw rod 11 that is located in the nut member 10, thereby applying torque to the screw rod 11 that tends to push the screw rod 11 out of the nut member 10 by its torsional deformation.

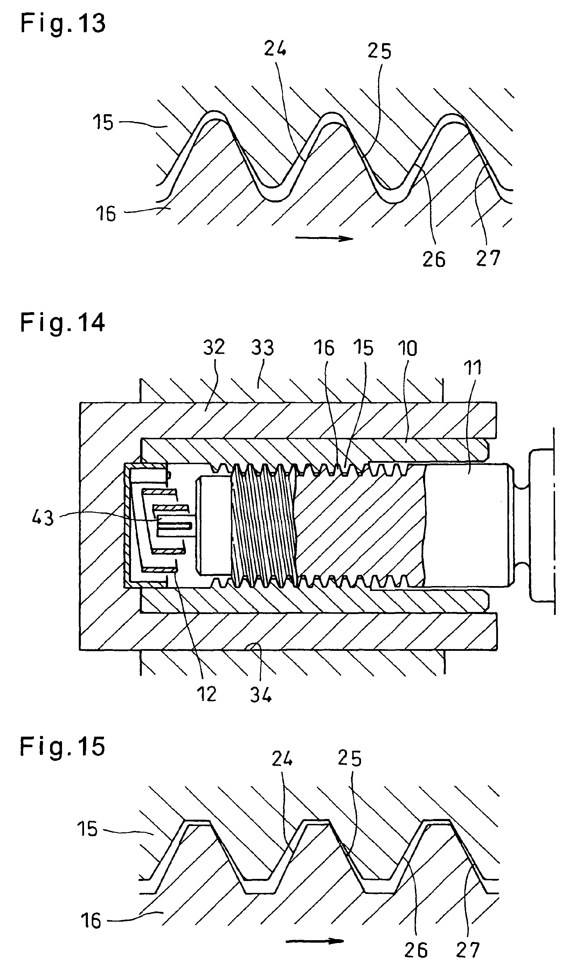

As shown in Fig. 13, the external thread 16 on the outer periphery of the screw rod 11 is a triangular thread of which the pressure flank 24 and the clearance flank 25 are equal in flank angle to each other. The internal thread 15 on the inner periphery of the nut member 10 is also a triangular thread of which the pressure flank 26 and the clearance flank 27 are equal in flank angle to each other. The pressure flank 24 of the external thread 16 has a smaller flank angle than the pressure flank 26 of the internal thread 15.

In the arrangement in which the external thread 16 and the internal thread 15 are triangular threads, too, by arranging the pressure flank 24 of the external thread 16 so as not to be parallel to the pressure flank 26 of the internal thread 15, oil film is less likely to develop due to the squeezing effect, which in turn allows the auto-tensioner to stably perform its damper function.

In the arrangement of Fig. 14, the return spring 12 is a volute spring comprising a helically wound thin sheet, having its radially outer end rotationally fixed to the closed end of the housing 32 and its radially inner end received in a slit formed in a protrusion 43 of the screw rod 11 located in the nut member 10, thereby applying torque to the screw rod 11 that tends to push the screw rod 11 out of the nut member 10 by its torsional deformation.

As shown in Fig. 15, the external thread 16 on the outer periphery of the screw rod 11 is a trapezoidal thread of which the pressure flank 24 and the clearance flank 25 are equal in flank angle to each other. The internal thread 15 on the inner periphery of the nut member 10 is also a trapezoidal thread of which the pressure flank 26 and the clearance flank 27 are equal in flank angle to each other. The pressure flank 24 of the external thread 16 has a smaller flank angle than the pressure flank 26 of the internal thread 15.

In the arrangement in which the external thread 16 and the internal thread 15 are trapezoidal threads, too, by arranging the pressure flank 24 of the external thread 16 so as not to be parallel to the pressure flank 26 of the internal thread 15, oil film is less likely to develop due to the squeezing effect, which in turn allows the auto-tensioner to stably perform its damper function.

## Claims

1. An auto-tensioner comprising a nut member (10) having an internal thread on its inner periphery, a screw rod (11) having an external thread (16) on its outer periphery which is in threaded engagement with the internal thread (15), said external thread (16) and said internal thread (15) having pressure flanks (24 and 26), respectively, for receiving pressure when an axial load is applied that tends to push the screw rod (11) into the nut member (10), and a return spring (12) biasing the screw rod (11) in a direction to protrude from the nut member (10), thereby removing slackness of a chain (6) or a belt by protruding the screw rod (11) from the nut member (10),
**characterized in that**
the flank angle (α) of the pressure flank (24) of the external thread (16) is smaller than the flank angle (β) of the pressure flank (26) of the internal thread (15).

2. The auto-tensioner of claim 1 wherein an oil film expelling groove (38, 39) is formed in at least one of the pressure flank (24) of the external thread (16) and the pressure flank (26) of the internal thread (15).

3. The auto-tensioner of claim 2 wherein said oil film expelling groove (38, 39) is a helical groove extending the central portion of said at least one of the pressure flanks (24, 26) along its lead.

4. The auto-tensioner of any of claims 1 to 3 wherein said external thread (16) and the internal thread (15) have clearance flanks (25 and 27), respectively, wherein the flank angles (α and β) of the pressure flanks (24 and 26) are greater than the flank angles of the clearance flanks (25 and 27), respectively, whereby the external thread (16) and the internal thread (15) have a serration-shaped section, and wherein said return spring (12) is a compression coil spring that applies an axial force to the screw rod (11) that tends to push the screw rod (11) out of the nut member (10).

5. The auto-tensioner of any of claims 1 to 3 wherein said external thread (16) and the internal thread (15) are serration-shaped threads, trapezoidal threads, or triangular threads, and wherein said return spring (12) is a torsion spring that applies torque to the screw rod (11) that tends to push the screw rod (11) out of the nut member (10).

6. The auto-tensioner of claim 5 wherein said torsion spring is a torsion coil spring, a spiral spring or a volute spring.

7. The auto-tensioner of any of claims 1 to 6 wherein the nut member (10) is slidably inserted in a cylindrical housing (9) having an open end and a closed end such that an end of the screw rod (11) protruding from the nut member (10) is located nearer to the closed end of the housing (9) and is in abutment with a rod seat (17) provided in the housing (9), whereby the nut member (10) presses a chain (6) or a belt.

8. The auto-tensioner of any of claims 1 to 6 wherein the nut member (10) is fixedly mounted in a cylindrical housing (32) having an open end and a closed end such that an end of the screw rod (11) protruding from the nut member (10) is located nearer to the open end of the housing (32), whereby the screw rod (11) presses a chain (6) or a belt.

## Patentansprüche

1. Selbstspanner, aufweisend ein Mutternteil (10) mit einem Innengewinde an seinem Innenumfang, eine Gewindestange (11) mit einem Außengewinde (16) an seinem Außenumfang, der im verschraubten Eingriff mit dem Innengewinde (15) ist, wobei das Außengewinde (16) und das Innengewinde (15) jeweils Druckflanken (24 und 26) haben, um Druck aufzunehmen, wenn eine Axiallast aufgebracht wird, die tendiert, die Gewindestange (11) in das Mutternteil (10) zu drücken, und eine Rückholfeder (12), die die Gewindestange (11) in eine Richtung vorspannt, um von dem Mutternteil (10) vorzuspringen, um **dadurch** das Durchhängen einer Kette (6) oder eines Riemens durch Vorspringen der Gewindestange (11) von dem Mutternteil (10) zu beseitigen,
**dadurch gekennzeichnet, dass**
der Flankenwinkel (α) der Druckflanke (24) des Außengewindes (16) kleiner als der Flankenwinkel (β) der Druckflanke (26) des Innengewindes (15) ist.

2. Selbstspanner nach Anspruch 1, wobei eine ölfilmabführende Nut (38, 39) in zumindest einer der Druckflanke (24) des Außengewindes (16) oder der Druckflanke (26) des Innengewindes (15) gebildet ist.

3. Selbstspanner nach Anspruch 2, wobei die ölfilmabführende Nut (38, 39) eine Schraubennut ist, wobei sich der zentrale Abschnitt von zumindest einer der Druckflanken (24, 26) entlang seiner Erstreckung erstreckt.

4. Selbstspanner nach einem der Ansprüche 1 bis 3, wobei das Außengewinde (16) und das Innengewinde (15) jeweils Abstandsflanken (25 und 27) haben, wobei die Flankenwinkel (α und β) der Druckflanken (24 und 26) jeweils größer als die Flankenwinkel der Abstandsflanken (25 und 27) sind, wodurch das Außengewinde (16) und das Innengewinde (15) einen sägezahnförmigen Abschnitt haben und wobei die Rückholfeder (12) eine Druckschraubenfeder ist, die eine Axialkraft auf die Gewindestange (11) aufbringt, die dazu neigt, die Gewindestange (11) aus dem Mutternteil (10) zu drücken.

5. Selbstspanner nach einem der Ansprüche 1 bis 3, wobei das Außengewinde (16) und das Innengewinde (15) sägezahnförmige Gewinde, trapezförmige Gewinde oder Dreiecks- Gewinde sind, wobei die Rückholfeder (12) eine Torsionsfeder ist, die ein Drehmoment auf die Gewindestange (11) aufbringt, die dazu neigt, die Gewindestange (11) aus dem Mutternteil (10) herauszudrücken.

6. Selbstspanner nach Anspruch 5, wobei die Torsionsfeder eine Torsionsschraubenfeder, eine Spiralfeder oder eine Schneckenfeder ist.

7. Selbstspanner nach einem der Ansprüche 1 bis 6, wobei das Mutternteil (10) gleitbar in ein zylindrisches Gehäuse (9) eingesetzt ist, das ein offenes Ende und ein geschlossenes Ende derart hat, dass ein Ende der Gewindestange (11), das aus dem Mutternteil (10) vorspringt, näher zu dem geschlossenen Ende des Gehäuses (9) angeordnet ist und mit einem Stangensitz (17), vorgesehen in dem Gehäuse (9), in Anlage ist, wodurch das Mutternteil (10) eine Kette (6) oder einen Riemen presst.

8. Selbstspanner nach einem der Ansprüche 1 bis 6, wobei das Mutternteil (10) fest in dem zylindrischen Gehäuse (32) mit einem offenen Ende und einem geschlossenen Ende derart montiert ist, dass ein Ende der Gewindestange (11), das von dem Mutternteil (10) vorspringt, näher zu dem offenen Ende des Gehäuses (32) angeordnet ist, wodurch die Gewindestange (11) eine Kette (6) oder einen Riemen presst.

## Revendications

1. Auto-tendeur comprenant un élément d'écrou (10) ayant un filetage interne sur sa périphérie intérieure, une tige filetée (11) ayant un filetage externe (16) sur sa périphérie extérieure qui est en prise de filetage avec le filetage interne (15), ledit filetage externe (16) et ledit filetage interne (15) ayant des flancs de pression (24 et 26), respectivement pour recevoir une pression lorsqu'une charge axiale est appliquée qui a tendance à pousser la tige filetée (11) dans l'élément d'écrou (10), et un ressort de rappel (12) sollicitant la tige de vis (11) dans une direction pour faire saillie de l'élément d'écrou (10) en supprimant ainsi un jeu d'une chaîne (6) ou d'une courroie en amenant la tige filetée (11) à faire saillie de l'élément d'écrou (10),
**caractérisé en ce que**
l'angle de flanc (α) du flanc de pression (24) du filetage externe (16) est plus petit que l'angle de flanc (β) du flanc de pression (26) du filetage interne (15).

2. Auto-tendeur selon la revendication 1, où une rainure d'expulsion de film d'huile (38, 39) est formée dans au moins un parmi le flanc de pression (24) du filetage externe (16) et le flanc de pression (26) du filetage interne (15).

3. Auto-tendeur selon la revendication 2, où ladite rainure d'expulsion de film d'huile (38, 39) est une rainure hélicoïdale s'étendant dans la portion centrale desdites au moins un des flancs de pression (24, 26) le long de son pas.

4. Auto-tendeur selon l'une quelconque des revendications 1 à 3, où ledit filetage externe (16) et le filetage interne (15) ont des flancs de jeu (25 et 27), respectivement, où les angles de flanc (α et β) des flancs de pression (24 et 26) sont plus grands que les angles de flanc des flancs de jeu (25 et 27), respectivement, par quoi le filetage externe (16) et le filetage interne (15) ont une section de forme dentelée, et où ledit ressort de rappel (12) est un ressort hélicoïdal de compression qui applique une force axiale à la tige filetée (11) qui a tendance à pousser la tige filetée (11) hors de l'élément d'écrou (10).

5. Auto-tendeur selon l'une quelconque des revendications 1 à 3, où ledit filetage externe (16) et le filetage interne (15) sont des filetages de forme dentelée, des filetages trapézoïdaux ou des filetages triangulaires, et où ledit ressort de rappel (12) est un ressort de torsion qui applique un couple à la tige filetée (11) qui a tendance à pousser la tige filetée (11) hors de l'élément d'écrou (10).

6. Auto-tendeur selon la revendication 5, où ledit ressort de torsion est un ressort hélicoïdal de torsion, un ressort spiral ou un ressort en volute.

7. Auto-tendeur selon l'une quelconque des revendications 1 à 6, où l'élément d'écrou (10) est inséré d'une manière coulissante dans un boîtier cylindrique (9) ayant une extrémité ouverte et une extrémité fermée de telle sorte qu'une extrémité de la tige filetée (11) dépassant l'élément d'écrou (10) est situé plus près de l'extrémité fermée du boîtier (9) et est en butée contre un siège de tige (17) réalisé dans le boîtier (9), moyennant quoi l'élément d'écrou (10) exerce une pression sur une chaîne (6) ou une courroie.

8. Auto-tendeur selon l'une quelconque des revendications 1 à 6, où l'élément d'écrou (10) est monté fixement dans un boîtier cylindrique (32) ayant une extrémité ouverte et une extrémité fermée de sorte qu'une extrémité de la tige filetée (11) dépassant de l'élément (10) est plus près de l'extrémité ouverte du boîtier (32), moyennant quoi la tige filetée (11) exerce une pression sur une chaîne (6) ou une courroie.
